# EUROPÄISCHE PATENTSCHRIFT

(11) **EP 1 043 215 B1**
(45) Veröffentlichungstag und Bekanntmachung des Hinweises auf die Patenterteilung: **18.05.2005**
(21) Anmeldenummer: 00106620.8
(22) Anmeldetag: 28.03.2000
(51) Int. Cl.: B62D 25/04, B62D 27/02

(54) **Kantenverbindung von zwei Bauteilen, insbesondere zwischen einem Dachblech und einem oberen Seitenteil einer Kraftfahrzeug-Karosserie**
Edge-bonding of parts , in particular between a roofpanel and a sidepanel of a motorcar
Jonction des bouts des éléments, en particulier entre une tôle de toit et de panneau latéral d'une carrosserie d'un véhicule automobile

(30) Priorität: 03.04.1999 DE 19915278
(43) Veröffentlichungstag der Anmeldung: 11.10.2000
(73) Patentinhaber: Volkswagen Aktiengesellschaft, 38436 Wolfsburg (DE)
(72) Erfinder: Cordes, Rainer, 38559 Wagenhoff (DE); Rickelt, Hans-Georg, 85134 Stammham (DE)

(56) Entgegenhaltungen:
- DE-A- 19 523 005
- GB-A- 511 210

## Beschreibung

Die Erfindung betrifft eine Kantenverbindung gemäß dem Oberbegriff des Patentanspruchs 1.

Mit der gattungsgemäßen GB 511 210 A werden Kraftfahrzeug-Karosserien offenbart, die im Wesentlichen eine Verbindung zwischen einem Dachblech und einem oberen Seitenteil mit einem im Dachblech oder Seitenteil eingeformten, Dachkanal vorsehen. Dieser Druckschrift sind des Weiteren Kantenverbindungen zwischen dem Dachblech und dem Seitenteil zu entnehmen, bei denen eines der beiden Bauteile stufenbildend über dem zweiten Bauteil übersteht.

Ferner ist mit der DE 195 23 005 A1 eine dachkanalfreie Verbindung zwischen einem Dachblech und einem oberen Seitenteil offenbart, wobei auch hier ein Bauteil, vorliegend das Seitenteil stufenbildend über dem Dachteil übersteht.

Betrachtet man den Einsatzfall der Erfindung, nämlich die Kantenverbindung zwischen einem Dachblech und einem oberen Karosserie-Seitenteil eines Kraftfahrzeugs näher, so ergeben sich Schwierigkeiten dadurch, daß die Abmessungen der beiden Bauteile in Querrichtung des Fahrzeugs betrachtet Fertigungstoleranzen aufweisen. Das bedeutet, daß infolge der Festlegung der Bauteile an vom Ort der Kantenverbindung entfernten Stellen, also beispielsweise des Seitenteils an einem Dachlängsträger, zwischen den zu verbindenden Kanten entweder ein Spalt vorliegt oder Übermaß. Man kann dem dadurch begegnen, daß man gewollt einen Spalt vorsieht, dessen Spaltweite dann in Abhängigkeit von den jeweiligen Fertigungstoleranzen variiert. Eine derartige Unterbrechung der Karosserieoberfläche ist aber aus optischen Gründen auch dann häufig unerwünscht, wenn sie mittels einer

Leiste oder eines Keders gleichsam kaschiert wird. Hinzu kommt der Aufwand für einen Keder und dessen Befestigung an der eigentlichen Karosserie.

Der Erfindung liegt die Aufgabe zugrunde, eine derartige Toleranzprobleme zumindest weitgehend vermeidende Kantenverbindung der beschriebenen Art zu schaffen.

Die erfindungsgemäße Lösung besteht in den kennzeichnenden Merkmalen des Hauptanspruchs, vorteilhafte Ausgestaltungen der Erfindung beschreiben die Unteransprüche.

Da bei der Erfindung die beiden verbundenen Kanten im Querschnitt komplementäre Schrägen aufweisen, stützt sich also gleichsam eines der Bauteile auf dem anderen ab. Vor der Herstellung der beispielsweise durch Schweißen oder Laserlöten hergestellten eigentlichen Verbindung kann also das die "obenliegende" Schräge aufweisende Bauteil auf dem anderen längs der Schräge gleiten, so daß toleranzbedingte Abweichungen der Istwerte der Querabmessungen der Bauteile von ihren Sollwerten lediglich zu einer Änderung der Höhe der definierten Stufe führen, nicht aber einen Spalt zwischen den beiden Bauteilen erfordern. Diese Änderung der Stufenhöhe ist aber für das Auge eines üblichen Betrachters nicht wahrnehmbar, d.h. sie beeinträchtigt das Aussehen in dem Beispiel der Kraftfahrzeugkarosserie nicht.

Zwei Ausführungsbeispiele der Erfindung werden im folgenden anhand der Zeichnung erläutert, die Querschnitte durch einen Dachseitenbereich einer Kraftfahrzeugkarosserie wiedergeben.

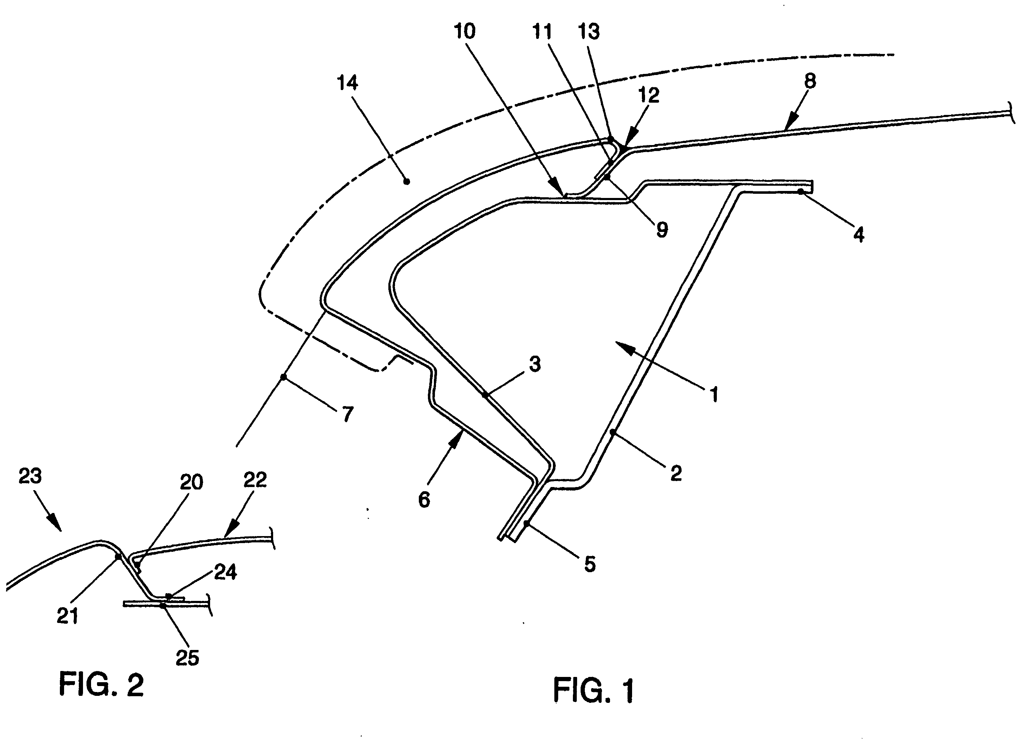

Betrachtet man zunächst Figur 1, so erkennt man bei 1 einen ein geschlossenes Hohlprofil bildenden Dachlängsträger, dessen Bestandteile das innere Seitenteil 2 und das Verstärkungsblech 3 bilden. Diese beiden Teile 2 und 3 sind bei 4 mit ihren Flanschen in üblicher Weise durch Schweißverbindungen miteinander verbunden; dort kann auch ein nicht dargestellter Dachquerträger festgelegt werden.

Bei 5 findet sich ferner eine durch Schweißen gewonnene Verbindung zwischen den Flanschen von innerem Seitenblech 2, Verstärkungsblech 3 und äußerem Seitenteil 6. Das äußere Seitenteillbübergreift eine Seitentür, von der lediglich bei 7 schematisch eine Türseitenscheibe angedeutet ist.

Das Dachblech 8 besitzt die schräge Kante 9, die bei 10 durch Laserlötung an dem Verstärkungsblech 3 festgelegt ist. Der Bereich 9 bildet eine schräge Kante im Sinne der Erfindung, und zwar in diesem Fall die die schräge Kante 11 des Seitenteils 6 untergreifende Kante. Die beiden Kanten 9 und 11 bilden komplementäre Schrägen, so daß sie, bevor sie beispielsweise ebenfalls durch eine Laserlötung, die bei 12 angedeutet ist, miteinander verbunden sind, in Richtung ihrer Schrägen sich relativ zueinander bewegen können. Nach Festlegung des Dachblechs 8 bei 10, wobei automatisch Toleranzen der Querabmessung des Dachblechs 8 berücksichtigt werden, an dem die Unterstruktur bildenden Längsträger 1 stellt sich die schräge Kante 11 gleichsam auf der schrägen Kante 9 gleitend in einer Höhe ein, die die Toleranzen der beiden zu verbindenden Teile 6 und 8 kompensiert.

Wie bei 13 angedeutet, ist das äußere Seitenteil 6 im Bereich der Kantenverbindung so ausgelegt, daß es bewußt eine Stufe bildet, also über die Ebene des Dachblechs 8 übersteht. Änderungen der Höhe der schrägen Kante 11 relativ zur schrägen Kante 9 führen demgemäß zu einer Änderung der Höhe der Stufe, die optisch in keiner Weise ins Auge fällt, so daß Toleranzunterschiede unbemerkt bleiben. Der Einsatz von Kedern oder dergleichen zur Abdeckung von Spalten erübrigt sich also. Die Verbindung 12 kann auch leicht wasserundurchlässig ausgebildet werden.

Das Vorsehen der Stufe 13 an der Kante 11 des Seitenteils 6 bietet die vorteilhafte Möglichkeit, diese Stufe sowie die Unterseite des Seitenteils 6 zum Anschluß eines bei 14 nur angedeuteten, da an sich bekannten Dachgepäckträgers auszunutzen. Die durch den Längsträger 1 und die Banteile 6 und 8 gebildete Verbundkonstruktion bietet auch eine hinreichende Festigkeit zum Tragen des Dachgepäckträgers.

Wie Figur 2 erkennen läßt, ist es grundsätzlich auch möglich, die die andere schräge Kante 20 untergreifende schräge Kante 21 nicht dem Dachblech 22, sondern dem äußeren Seitenteil 23 zuzuordnen. In diesem Falle ist also das äußere Seitenteil 23 bei 24 beispielsweise durch Laserlötung mit dem oberen Bereich des Verstärkungsblechs 25 verbunden.

Mit der Erfindung ist demgemäß mit einfachen Mitteln eine gattungsgemäße Kantenverbindung geschaffen, die ohne Einsatz zusätzlicher Teile auch relativ große Toleranzen kaschiert.

## Patentansprüche

1. Kantenverbindung von zwei Bauteilen (6, 8; 23, 22), die an von der Kantenverbindung entfernten Stellen an einer Unterstruktur (1) arretiert sind, wobei an der Kantenverbindung ein erstes Bauteil (6; 23) gewollt stufenbildend (13) über das zweite Bauteil (8; 22) übersteht, die verbundenen Kanten (9, 11; 20, 21) in Querschnitten durch die Kantenverbindung komplementäre Schrägen bilden und ein Bauteil (8; 23) mit der die Schräge des anderen Bauteils (6;22) untergreifenden Schräge im Bereich der Kantenverbindung an der Unterstruktur (1 ) festgelegt (10; 24) ist, **dadurch gekennzeichnet, daß** das erste Bauteil (6; 23) durch ein oberes Seitenteil (6; 23) und das zweite Bauteil (8; 22) durch ein Dachblech (8; 22) einer Kraftfahrzeug-Karosserie gebildet sind und die vom ersten Bauteil/Seitenteil (6; 23) ausgebildete Stufe (13) im Hinblick auf den Angriff einer Halterung (14) eines Dachgepäckträgers ausgelegt ist.

2. Kantenverbindung nach Anspruch 1, **dadurch gekennzeichnet, daß** bei aus Metall bestehenden Bauteilen (6, 8) die Schrägen durch Laserlötung (12) verbunden sind.

3. Kantenverbindung nach einem der Ansprüche 1 und 2, **dadurch gekennzeichnet, daß** insbesondere bei einer einen geschlossenen Hohlträger (1) bildenden Unterstruktur (1) die Festlegung an der Unterstruktur (1) durch Laserlötung (10) erfolgt ist.

## Claims

1. Edge-bonding of two parts (6, 8; 23, 22) which are locked to an understructure (1) at points remote from the edge-bonding, a first part (6; 23) on the edge-bonding protruding intentionally, forming a step (13), over the second part (8; 22), the bonded edges (9, 11; 20, 21) forming complementary slopes in cross sections through the edge-bonding, and one part (8; 23) being secured (10; 24) on the understructure (1) in the region of the edge-bonding with the slope engaging below the slope of the other part (6; 22), **characterized in that** the first part (6; 23) is formed by an upper side panel (6; 23) and the second part (8; 22) is formed by a roof panel (8; 22) of a motorcar body, and the step (13) which is formed by the first part/side panel (6; 23) is configured in respect of the engagement of a mount (14) for a roof rack.

2. Edge-bonding according to Claim 1, **characterized in that**, in the case of parts (6, 8) consisting of metal, the slopes are connected by laser soldering (12).

3. Edge-bonding according to either of Claims 1 and 2, **characterized in that**, in particular in the case of an understructure (1) forming a closed hollow support (1), the securing on the understructure (1) takes place by means of laser soldering (10).

## Revendications

1. Jonction des bords de deux composants (6, 8 ; 23, 22), qui sont bloqués sur une sous-structure (1) en des points éloignés de la jonction des bords, un premier composant (6 ; 23) dépassant sur la jonction des bords de manière voulue en formant un échelon (13) au-delà du deuxième composant (8 ; 22), les bords reliés (9, 11 ; 20, 21) formant en sections transversales à travers la jonction des bords des biseaux complémentaires et un composant (8 ; 23) est fixé (10 ; 24) avec le biseau venant en prise en dessous du biseau de l'autre composant (6 ; 22) dans la région de la jonction des bords sur la sous-structure (1), **caractérisée en ce que** le premier composant (6 ; 23) est formé par une partie latérale supérieure (6 ; 23) et le deuxième composant (8 ; 22) est formé par une tôle de toit (8 ; 22) d'une carrosserie de véhicule automobile et l'échelon (13) formé par le premier composant/la partie latérale (6 ; 23) est conçu aux fins de l'engagement d'une fixation (14) d'une galerie de toit.

2. Jonction des bords selon la revendication 1,
**caractérisée en ce que** dans le cas de composants (6, 8) constitués de métal, les biseaux sont reliés par soudage au laser (12).

3. Jonction des bords selon l'une quelconque des revendications 1 et 2, **caractérisée en ce que** notamment dans le cas d'une sous-structure (1) formant un support creux fermé (1), la fixation sur la sous-structure (1) s'effectue par soudage au laser (10).
